# EUROPÄISCHE PATENTSCHRIFT

(11) **EP 1 569 983 B1**
(45) Veröffentlichungstag und Bekanntmachung des Hinweises auf die Patenterteilung: **07.11.2007**
(21) Anmeldenummer: 03795885.7
(22) Anmeldetag: 11.12.2003
(51) Int. Cl.: C08G 69/48, C08H 1/00, C04B 24/28

(54) **WASSERLÖSLICHE, BIOLOGISCH ABBAUBARE COPOLYMERE AUF POLYAMIDBASIS UND DEREN VERWENDUNG**
POLYAMIDE-BASED WATER-SOLUBLE BIODEGRADABLE COPOLYMERS AND THE USE THEREOF
COPOLYMERES HYDROSOLUBLES BIODEGRADABLES A BASE DE POLYAMIDES ET LEUR UTILISATION

(30) Priorität: 11.12.2002 DE 10257701; 31.03.2003 DE 10314354
(43) Veröffentlichungstag der Anmeldung: 07.09.2005
(73) Patentinhaber: BASF Construction Polymers GmbH, 83308 Trostberg (DE)
(72) Erfinder: SPINDLER, Christian, 84489 Burghausen (DE); PLANK, Johann, 83308 Trostberg (DE)
(74) Vertreter: Dey, Michael
(86) Internationale Anmeldenummer: PCT/EP2003/014088
(87) Internationale Veröffentlichungsnummer: WO 2004/052960

(56) Entgegenhaltungen:
- DE-A- 4 421 722
- DE-A- 4 430 362
- DE-B- 1 003 444
- US-A1- 2002 005 287

## Beschreibung

Gegenstand der vorliegenden Erfindung sind wasserlösliche, bioabbaubare Copolymere auf Polyamidbasis und deren Verwendung.

Polykondensationsprodukte als solche und insbesondere deren Verwendung im bauchemischen Bereich sind aus dem Stand der Technik hinlänglich bekannt.

So werden Polykondensate als sogenannte Hochleistungsfließmittel eingesetzt. Diese umfassen sulfonierte Aminoplastbildner, sulfonierte Naphthalin- und Phenol-Formaldehydharze sowie sulfonierte Aceton-Formaldehydharze.

Die Patente DE 1 671 017 und DE 195 38 821 beschreiben sulfonierte Polykondensationsprodukte aus Amino-s-triazinen und Formaldehyd; aus US 5,891,983 sind Kondensationsprodukte aus Triazinen und Glyoxalsäure bekannt. Polykondensationsprodukte aus Naphthalinsulfonsäuren mit Formaldehyd beschreiben die Patentdokumente US 2,141,569, DE 2 007 603 und EP 214 412. Hochleistungsfließmittel, die durch die Reaktion von Ketonen mit Aldehyden erhalten werden sind in US 4,585,853 vorbeschrieben.

Wässerige Suspensionen von anorganischen Pulvern wie Tonen, Silikaten oder anorganischen Bindern werden in der Praxis für bestimmte Anwendungen oft mit Additiven versetzt. Die Gruppe der Fließmittel dient dabei dazu, die Verarbeitbarkeit der mit ihnen versetzten Suspensionen zu verbessern. Bei diesen Additiven handelt es sich in der Regel um (Poly) elektrolyte, die das rheologische Verhalten der Suspensionen unter Scherung beeinflussen:

Die einzelnen Partikel des suspendierten Stoffes besitzen z.B. gleichzeitig positive und negative Oberflächenladungen, wodurch zwischen den Partikeln anziehende Coulomb-Kräfte wirken, die zur Agglomeratbildung führen und die die Viskosität der Suspension erheblich erhöhen. Aufgrund ihrer Struktur adsorbieren die beschriebenen Additive an die Oberflächen des suspendierten Materials. Die polymeren Additive neutralisieren dabei entweder den positiven oder den negativen Anteil der Oberflächenladung, so dass sich die einzelnen Feststoffteilchen in der Suspension elektrostatisch abstoßen. Eine Agglomeratbildung wird so verhindert, bestehende Agglomerate werden aufgebrochen. Als Folge verringert sich die Viskosität der Suspension erheblich. In bauchemischen Anwendungen wird der beschriebene Effekt besonders zur Herstellung von Zementsuspensionen genutzt.

Viele andere suspendierte Stoffe, wie Calciumsulfat-Bindemittel, Calciumcarbonat oder verschiedene Pigmente besitzen nur positive oder nur negative Oberflächenladungen. Hier wird die elektrolytische Abstoßung durch Adsorption der Polyelektrolyte auf die Partikeloberflächen verstärkt.

Für die Herstellung gut verarbeitbarer Suspensionen hydraulischer Bindemittel muss in der Regel deutlich mehr Wasser eingesetzt werden, als für das chemische Abbinden des Klinkers notwendig ist. Das überschüssige Wasser verdampft nach dem Abbinden und führt zu einer deutlich weniger kompakten, hydratisierten Phase, was wiederum in einer deutlich verringerten Festigkeit der abgebundenen Phase resultiert. Durch den Einsatz von Fließmitteln kann nun die Menge des erforderlichen Wassers bei unveränderter Verarbeitbarkeit verringert werden. Dies führt zu deutlich verbesserten Druckfestigkeiten der abgebundenen Phasen.

Von vielen im Stand der Technik beschriebenen Polykondensaten ist bekannt, dass diese in aller Regel nicht biologisch abbaubar sind. Somit können sich diese Verbindungen in der Umwelt anreichern und zur Kontamination von Böden oder Gewässern beitragen.

Dies ist von besonderer Relevanz, wenn Zementschlämmen z.B. mit Trinkwasser oder landwirtschaftlichen Anbauflächen in Kontakt kommen. Besonders erwähnenswert ist in diesem Zusammenhang auch die Verwendung von Fließmitteln bei der Exploration und Produktion von Erdöl oder Erdgas auf hoher See, also im sogenannten off-shore-Bereich. Hier finden Fließmittel für zementäre Systeme in der Konstruktion von Bohrplattformen und in der Bohrlochzementierung Anwendung. Die eingesetzten Fließmittel können im ersten Fall durch Seewasser ausgewaschen und im letzteren Fall aus der Zementschlämme in wasserführende Formationsschichten übertreten. Deswegen sind nach der "Konvention für den Schutz der Marinen Umwelt im Nord-Ost-Atlantik" (OSPAR Convention) bioabbaubare Produkte beim Einsatz in mariner Umgebung zu bevorzugen.

Als Stand der Technik sind bereits einige bioabbaubare Fließmittel für Zementschlämmen beschrieben, wie z.B. in US 6,019,835, aus der modifizierte Lignosulfonate als bioabbaubare Fließmittel bekannt sind. Die vorveröffentliche US-Anmeldung 2002/0005287 beschreibt Polyasparaginsäure als bioabbaubares Hochleistungsfließmittel.

Zwar sind diese Fließmittel biologisch abbaubar, sie weisen aber in der Regel den großen Nachteil auf, dass sie in Zementschlämmen ein abbindeverzögerndes Verhalten entfalten.

Der vorliegenden Erfindung lag deshalb die Aufgabe zugrunde, wasserlösliche und biologisch abbaubare Copolymere auf Polyamidbasis bereitzustellen, die als Hochleistungsfließmittel eingesetzt werden können und die dabei das hydraulische Abbinden des Klinkers kaum verzögern.

Gelöst wurde diese Aufgabe mit entsprechenden Copolymeren, die mindestens eine aufgepfropfte Seitenkette aufgebaut aus Aldehyden und Schwefel-haltigen Säuren oder deren Salzen enthalten.

Überraschend wurde mit den erfindungsgemäßen Copolymeren festgestellt, dass sie nicht nur entsprechend der Aufgabenstellung als Fließmittel im Hochleistungsbereich eingesetzt werden können und generell eine nur wenig ausgeprägte verzögernde Wirkung entfalten, sondern dass sie auch ihre vorteilhaften Eigenschaften unter Extrembedingungen wie hohe Temperaturen, hohe Drücke und hohe Salzkonzentrationen entfalten, was so nicht zu erwarten war.

Darüber hinaus wurde vollkommen unerwartet gefunden, dass die erfindungsgemäßen Copolymere auch als Wasserretentionsmittel geeignet sind. Wasserretentionsmittel dienen dazu, das Entweichen von Wasser aus Schlämmen anorganischer oder organischer Binder oder Pigmente zu verhindern. Ursache für den Wasserverlust sind meist Kapillarkräfte, die von porösen Untergründen ausgehen. Wasserretentionsmittel können entweder durch ihre chemische Struktur Wasser an sich binden oder aber die Ausbildung eines dichten Filterkuchens auf dem Untergrund fördern.

Wasserretentionsbindemittel werden zu diesem Zweck z.B. in Putzen, Fliesenklebern, Fugenmörteln, Spachtel- und Selbstverlaufsmassen sowie Tiefbohrzementschlämmen eingesetzt. Außerdem werden sie unter anderem auch in wässerigen Tonsuspensionen, die z.B. als Bohrflüssigkeiten dienen können, verwendet. Aus dem Stand der Technik sind eine Reihe von Verbindungen mit derartigen Fähigkeiten bekannt. So beschreibt EP-A 1090 889 Mischungen aus Ton und Guar als Wasserretentionsmittel. DE-OS 195 43 304 und US 5,372,642 offenbaren Cellulosederivate als Wasserretentionsmittel, EP-A 116 671, EP-A 483 638 und EP-A 653 547 synthetische Polymere, die als Comonomer acrylamidosubstituierte Sulfonsäuren enthalten. Alle beschriebenen Polymere sind aber entweder nicht biologisch abbaubar oder aber sind bei hohen Temperaturen instabil. Die Copolymere gemäß Erfindung sind im Gegensatz dazu aber bioabbaubar und sie degradieren bei hohen Temperaturen in deutlich geringerem Ausmaß.

Als bevorzugt sind im Rahmen der vorliegenden Erfindung Copolymere anzusehen, die die Polyamid-Komponente in Anteilen von 5 bis 80 Gew.-% und bevorzugt von 10 bis 60 Gew.-%, die Aldehyd-Komponente in Anteilen von 5 bis 90 Gew.-% und bevorzugt von 10 bis 70 Gew.-% und die Schwefel-haltige Säure-Komponente in Anteilen von 5 bis 60 Gew.-% und bevorzugt von 15 bis 40 Gew.-% enthalten.

Als besonders vorteilhaft hat es sich gezeigt, wenn die neuen Copolymere als Polyamid-Komponente natürliche Polyamide, vor allem in Form von Caseinen, Gelatinen, Kollagenen, Knochenleimen, Blutalbuminen und Sojaproteinen, synthetische Polyamide und hier besonders Polyasparaginsäuren oder Copolymere aus Asparagin- und Glutaminsäure aufweisen. Die Erfindung schließt ebenfalls Polyamidkomponenten ein, die durch Oxidation, Hydrolyse oder Depolymerisation, wie z.B. durch enzymatischen Abbau aus den oben erwähnten Polyamiden hervorgehen, sowie beliebige Mischungen der genannten Vertreter.

Als erfindungswesentlich sind die den Copolymeren aufgepfropften Seitenketten anzusehen, wobei als aufgepfropfte Aldehyde solche auf Basis Paraformaldehyd, Paraldehyd und/oder unverzweigter nichtaromatischer Aldehyde, vorzugsweise mit 1 bis 5 C-Atomen, und insbesondere Formaldehyd, Acetaldehyd und Glyoxal zu bevorzugen sind. Anorganische Schwefelsalze, wie der schwefeligen oder der dischwefeligen Säure, also z.B. Sulfite, Hydrogensulfite und Disulfite von (Erd-)Alkalimetallen, von Aluminium, Eisen und Ammonium stellen die bevorzugte Basis für aufgepfropfte Schwefel-haltige Säuren oder deren Salze dar. Als organische Sulfonsäuren werden Naphthalin- und Benzolsulfonsäuren bevorzugt.

Werden anorganische schwefel-haltige Säuren oder deren Salze zur Synthese der Polymeren verwendet, so wird bei den erfindungsgemäßen wasserlöslichen und biologisch abbaubaren Copolymere auf Polyamidbasis vorzugsweise noch mindestens eine weitere Verbindung zum Aufbau der Seitenkette(n) eingesetzt.

In diesem Fall kommen als weitere aufgepfropfte Verbindungen Ketone, insbesondere solche auf Basis nichtaromatischer Ketone und hier vor allem 2-Propanon, 2-Butanon oder Brenztraubensäure in Frage. Als geeignet für die erfindungsgemäßen Copolymere haben sich aber auch aufgepfropfte aromatische Alkohole auf Basis von Phenolen, Kresolen, Catecholen oder Resorcinen erwiesen und Aminoplastbildner, insbesondere Dicyandiamid, Amino-s-triazine und Harnstoff(-Derivate). Als besonders geeignete Amino-s-triazine sind solche auf Basis von Melamin(-Derivaten) und besonders bevorzugt solche auf Basis von Melamin anzusehen.

Diese weiteren Verbindungen sollten in den Copolymer-Seitenketten bevorzugt in Anteilen von 5 bis 85 Gew.-% und insbesondere in Anteilen von 10 bis 70 Gew.-% enthalten sein.

Im Rahmen der vorliegenden Erfindung haben sich vor allem auch Copolymere als besonders vorteilhaft gezeigt, die nach einem speziellen Verfahren hergestellt wurden:

Bevorzugt wird dabei eine Pfropfpolymerisation bei Temperaturen zwischen -10 und 250 °C und insbesondere zwischen 0 und 130 °C, die vorzugsweise jeweils in Gegenwart eines Lösemittels und insbesondere in Gegenwart eines polaren Lösemittels wie Wasser oder Dimethylsulfoxid durchgeführt wird.

Die Erfindung berücksichtigt aber auch die Bildung der Pfropfpolymere durch thermische Behandlung, wie z.B. durch Co-Trocknung des Polyamids und des zu pfropfenden Polymers.

Insbesondere sind Copolymere geeignet, zu deren Seitenketten-Aufbau aus den einzelnen Bausteinen ("grafting from") als Lösemittel Wasser oder andere polare Lösemittel eingesetzt werden können. Polymere mit höheren Molmassen können dabei erhalten werden, wenn entweder wasserfrei gearbeitet oder aber das Wasser während der Reaktion destillativ abgetrennt wird.

Neben der Modifizierung des Polyamids in Lösung kann aber auch in Substanz gepfropft werden. Auch mit dieser Variante werden Polymere mit vergleichsweise großer Molmasse erhalten. Sind die auf das Polyamid zu pfropfenden Aldehyde in Lösemitteln löslich, die nicht mit Wasser mischbar sind, so können die Pfropfpolymere durch Grenzflächenkondensation aufgebaut werden: Dazu wird z.B. Sojaproteinisolat in der wässerigen Phase und die zu pfropfenden niedermolekularen Verbindungen in einer organischen Phase gelöst. Durch starkes Vermischen der beiden Phasen (z.B. durch einen Turax-Rührer) kann die Polykondensation an der Grenzfläche zwischen wässeriger und organischer Phase stattfinden.

Die erfindungsgemäßen gepfropften Copolymere können aber auch durch kovalente Verknüpfung der Kondensations- bzw. Additionsprodukte mit dem Polyamidrückgrat aufgebaut werden ("grafting onto"), was ebenfalls durch Reaktion in Lösung oder in Substanz erfolgen kann. Als Lösemittel sind hierbei wiederum Wasser oder das Dimethylsulfoxid bevorzugt.

Neben den beschriebenen Möglichkeiten zur kovalenten Verknüpfung der Polymere in Lösung oder in Substanz können die Copolymere erfindungsgemäß auch während der thermischen Co-Trocknung einer Lösung, die beide Polymere enthält, erzeugt werden. Hierbei kommt vor allem Wasser als Lösemittel in Frage. Der Trocknungsvorgang erfolgt am Besten durch Sprühtrocknung oder Walzentrocknung.

Alle Pfropfungsreaktionen sollten in einem Temperaturbereich zwischen -10°C und 250 °C durchgeführt werden. Wenn in Lösung gearbeitet wird, ist ein Temperaturbereich zwischen 0 °C und 130 °C bevorzugt. Es kann bei Normaldruck, aber auch bei erhöhtem Druck gearbeitet werden.

Neben den gepfropften Copolymeren selbst und den bevorzugt hergestellten Varianten beansprucht die vorliegende Erfindung auch deren Verwendung als Fließmittel für anorganische Bindemittel und Pigmente und insbesondere als Fließmittel für hydraulische Bindemittel. In diesem Zusammenhang sei nochmals erwähnt, dass sich die erfindungsgemäßen Copolymere vor allem durch die nur gering ausgeprägte abbindeverzögernde Wirkung auszeichnen. So hat sich z.B. herausgestellt, dass die als Fließmittel eingesetzten Copolymere eine im Vergleich zu Polyasparaginsäure deutlich reduzierte Abbindezeit von Zementschlämmen bedingen.

Daneben beansprucht die vorliegende Erfindung auch die Verwendung der erfindungsgemäßen Polymere als Wasserretentionsmittel. Auch hier ist die mit den erfindungsgemäßen Polymeren erreichbare geringe Abbindezeit von Vorteil.

Das Molekulargewicht der erfindungsgemäßen Copolymere ist insgesamt in keiner Weise eingeschränkt, doch haben sich für die speziellen Verwendungszwecke bestimmte Bereiche als durchaus vorteilhaft erwiesen. Werden die beanspruchten Copolymere als Fließmittel verwendet, sollten sie gemäß vorliegender Erfindung eine Molmasse M̅ₙ < 50 000 g/mol aufweisen. Werden die erfindungsgemäßen Copolymere als Wasserretentionsmittel eingesetzt, so hat sich eine Molmasse M̅ₙ > 50 000 g/mol als vorteilhaft erwiesen, wobei Molmassen M̅ₙ von > 80 000 g/mol besonders geeignet sind.

Hinsichtlich der Verwendung der vorgeschlagenen Copolymere sieht die vorliegende Erfindung auch deren Kombination mit modifizierten und/oder nicht modifizierten Polysacchariden vor, wobei modifizierte Cellulosen und dabei insbesondere Hydroxyalkylcellulosen mit C₁₋₄-Alkylresten als besonders bevorzugt angesehen werden. Mit dieser Erfindungsvariante werden unabhängig von der Molmasse der erfindungsgemäßen Copolymere synergistische Wasserretentionseffekte erzielt, was vor allem im Hinblick auf die Copolymere- mit M̅ₙ < 50 000 g/mol erstaunlich ist, die ja im Rahmen der Erfindung in dieser Größenordnung singulär eine Fließmittelwirkung zeigen.

Beschrieben werden wasserlösliche, biologisch abbaubare Copolymere auf Polyamidbasis, die mindestens eine aufgepfropfte Seitenkette aufgebaut aus Aldehyden und Schwefel-haltigen Säuren und deren Salzen und gegebenenfalls mindestens einer Verbindung der Reihe Ketone, aromatische Alkohole, Harnstoff(-Derivate) und Amino-s-triazine enthalten. Dabei werden als bevorzugte Polyamid-Komponenten natürliche Polyamide, wie Caseine, Gelatinen, Kollagene, Knochenleime, Blutalbumine und Sojaproteine bzw. deren Abbauprodukte und synthetische Polyamide, wie Polyasparaginsäuren oder Copolymere aus Asparagin- und Glutaminsäure eingesetzt. Diese Copolymere werden vor allem durch Pfropfpolymerisation bei Temperaturen zwischen -10 und 250 °C, vorzugsweise in Gegenwart eines Lösemittels, wie z.B. Wasser, oder aber durch thermische Trocknung erhalten, und sie werden insbesondere als Fließmittel oder Wasserretentionsmittel für anorganische Bindemittel und Pigmente eingesetzt, wobei sie vor allem zusammen mit hydraulischen Bindemitteln eine nur gering ausgeprägte abbindeverzögernde Wirkung entfalten.

Die nachfolgenden Beispiele veranschaulichen die Vorteile der wasserlöslichen und biologisch abbaubaren Copolymere auf Polyamidbasis gemäß Erfindung.

### Beispiele

### Herstellungsbeispiele:

### Beispiel 1:

20 g Casein wurden in 210 g Wasser gelöst und 17,5 g Natriumsulfit sowie 16,5 g Aceton zugesetzt. Die Reaktionslösung wurde dann auf 60 °C erwärmt und es wurden 80 g einer 30 %-igen wässerigen Formaldehydlösung zugetropft. Anschließend wurde 2 h bei 70 °C nachgerührt und der pH-Wert der Reaktionslösung mit Ameisensäure auf pH 7,0 eingestellt. Die Reaktionslösung wurde schließlich im Vakuum auf die Hälfte eingeengt, um das durch die konkurrierende Canizarro-Reaktion entstandene Methanol zu entfernen.

### Beispiel 2:

240 g Gelatine wurden in 600 g Wasser gelöst und 100 g Natriumsulfit sowie 100 g Aceton zugegeben. Die Reaktionslösung wurde auf 60 °C erwärmt und 360 g einer 30 %-igen wässerigen Formaldehydlösung zugegeben. Anschließend wurde die Reaktionslösung ca. 2 h bei 80 °C gerührt und mit Ameisensäure ein pH-Wert von ca. 7,0 eingestellt. Die Reaktionslösung wurde im Vakuum auf die Hälfte eingeengt, um das durch die konkurrierende Canizarro-Reaktion gebildete Methanol zu entfernen.

### Beispiel 3:

100 g Natriumsulfit und 100 g Aceton wurden in 250 g Wasser gelöst. Die Reaktionslösung wurde auf 60 °C erwärmt. Danach wurden 467 g einer 30 %-igen wässerigen Formaldehydlösung zugegeben. Anschließend wurde die Reaktionslösung 40 min bei 70 °C gerührt, es wurden zur Reaktionslösung 7,26 g Natriumpyrosulfit zugesetzt und dann weitere 30 min gerührt. Der pH-Wert der Reaktionslösung wurde mit Ameisensäure auf einen pH-Wert von ca. 7,0 eingestellt. Die Reaktionslösung wurde im Vakuum auf die Hälfte eingeengt, um das durch die konkurrierende Canizarro-Reaktion gebildete Methanol zu entfernen. Die Reaktionslösung wurde mit 6 L destilliertem Wasser verdünnt und 340 g Casein eingerührt. Die resultierende Polymerlösung wurde getrocknet, wobei die Pfropfung erfolgte.

### Beispiel 4:

100 g Sojaproteinisolat wurden in 600 g Wasser eingetragen. Der pH-Wert wurde mit Natriumhydroxid auf ca. 13 eingestellt. Anschließend wurden 104 g Natriumsulfit und 98 g Aceton zugegeben und die Reaktionsmischung auf 80 °C erwärmt. 356 g einer 30 %-igen Formaldehydlösung wurden zugetropft und die Reaktionslösung weiter gerührt. Der pH-Wert der Reaktionslösung wurde mit Ameisensäure auf pH 7,0 eingestellt. Die Reaktionslösung wurde schließlich im Vakuum auf die Hälfte eingeengt, um das durch die konkurrierende Canizarro-Reaktion entstandene Methanol zu entfernen.

### Beispiel 5:

15,9 g Polyasparaginsäure wurden in 100 g Wasser gelöst. Die Lösung wurde auf ca. 2 °C abgekühlt. Anschließend wurden 34,8 g Natriumsulfit und 36,0 g Brenzkatechin zugegeben. Dann wurden 40,9 g Acetaldehyd so zugetropft, dass die Temperatur der Vorlage 12 °C nicht überstieg. Nach vollendeter Zugabe des Acetaldehyds wurde die Reaktionstemperatur auf 75 °C erhöht und die Reaktionslösung bei dieser Temperatur über weitere zwei Stunden gerührt. Die Lösung wurde auf 20 °C abgekühlt, mit Ameisensäure auf pH 7,0 eingestellt und im Vakuum auf ca. die Hälfte eingeengt.

### Beispiel 6:

39,77 g Gelatine wurden in 100 mL Dimethylsulfoxid eingebracht. Anschließend wurden 17,4 g Natriumsulfit und 16,4 g Harnstoff eingerührt. Die Vorlage wurde auf 60 °C erwärmt und dann 6,9 g einer 40 %-igen wässerigen Glyoxallösung zugegeben. Die Reaktionslösung wurde auf 75 ° C erwärmt und zwei Stunden bei dieser Reaktionstemperatur gehalten. Das Dimethylsulfoxid wurde unter reduziertem Druck entfernt.

### Beispiel 7:

150 g einer 30%-igen wässerigen Formaldehydlösung wurden vorgelegt und auf 30 °C erwärmt. Nachdem 63 g Melamin und 50 g Natriumpyrosulfit zugegeben waren, wurden 95 g einer 15%-igen Natronlauge eingetragen. Anschließend wurde die Reaktionstemperatur auf 75 °C erhöht, es wurden 280 g Wasser zugegeben, der pH-Wert mit Schwefelsäure auf ca. 3,0 eingestellt, 79 g einer 40 % igen wässerigen Lösung von Polyasparaginsäure zugegeben und weitere zwei Stunden bei 75 °C gerührt.

Die Reaktionslösung wurde bei 80 °C unter reduziertem Druck auf ca. ein Drittel eingeengt. Danach wurde der pH-Wert mit Natronlauge auf ca. 7,0 erhöht.

### Anwendungsbeispiele:

### Beispiel 8:

Die Verflüssigungswirkung der erfindungsgemäßen Copolymere auf Zementschlämmen mit handelsüblichem Bauzement wurde mit Hilfe des Fließmaßes bestimmt. Dazu wurden 1,5 g Polymer in 140 g Leitungswasser gelöst und anschließend 300 g Zement (CEM 1 42,5 R) zugegeben. Die Schlämme wurde 60 sec stehen gelassen und danach 120 sec intensiv verrührt. Die Schlämme wurde in einen auf einer Glasplatte stehenden Vicat-Ring (H = 40 mm, dₖₗₑᵢₙ = 65 mm, d_{gross} = 75 mm) randgleich eingegossen. Der Vicat-Ring wurde 2 cm angehoben und ca. 5 sec über die ausfließende Schlämme gehalten. Der Durchmesser der ausgeflossenen Schlämme wurde an zwei zueinander senkrecht liegenden Achsen gemessen. Die Messung wurde einmal wiederholt. Das arithmetische Mittel aller vier Messungen ergibt das Fließmaß. Folgende Fließmaße wurden erhalten:

**Tabelle 1:**

| Polymer (gemäß Beispiel) | Fließmaß [cm] |
|---|---|
| - | 15 |
| 1 | 24 |
| 2 | 25 |
| 3 | 19 |
| 6 | 22 |

### Beispiel 9:

Der verzögernde Einfluss der erfindungsgemäßen Copolymere auf das Abbindeverhalten salzhaltiger Zementschlämmen wurde mit der folgenden Formulierung untersucht:

792 g Zement (CEM I 32,5) wurden mit 1,0 Gew.-% Copolymer vermischt. 77 g Natriumchlorid wurden in 308 mL Wasser gelöst. Die Mischung Zement/Copolymer wurde in das Salzwasser eingerührt und in ein atmosphärisches Konsistometer (Chandler Engineering, Tulsa, Katalog-Nr. 12-95-1) mit 90 °C überführt. Die Abbindezeit wurde bei 90 °C bestimmt. Als Referenz wurde Polyasparaginsäure Natriumsalz (PAS) verwendet (Tabelle 2).

**Tabelle 2:**

| Polymer (gemäß Beispiel) | Versteifungszeit [h:min] |
|---|---|
| - | 1:05 |
| PAS | > 6:00 |
| 2 | 3:07 |
| 3 | 4:30 |
| 7 | 5:10 |

### Beispiel 10:

Erstarrungsbeginn und Erstarrungsende der erfindungsgemäßen Copolymere in salzfreien Zementschlämmen wurden nach Vicat (DIN EN 196-3) bestimmt. Hierfür wurden 500 g Zement (CEM I 42,5 R) mit 210 g Leitungswasser und 2,5 g Copolymer vermischt. Die Mischung wurde homogenisiert und die Zementschlämme anschließend vermessen:

**Tabelle 3:**

| Polymer (gemäß Beispiel) | Abbindebeginn nach [h:min] | Abbindeende nach [h:min] |
|---|---|---|
| - | 6:30 | 7:50 |
| 1 | 7:00 | 11:30 |
| 2 | 7:50 | 11:20 |

### Beispiel 11:

Die Verflüssigungswirkung der erfindungsgemäßen Copolymere in Calciumsulfatschlämmen wurde mit Hilfe des Fließmaßes bestimmt. Es wurden 2 g Copolymer in 180 g Leitungswasser gelöst und anschließend 500 g α-Halbhydrat (CaSO₄ · 0,5 H₂O ) zugegeben. Die Schlämme wurde 60 sec stehengelassen und danach 45 sec intensiv verrührt. Die Schlämme wurde in einen auf einer Glasplatte stehenden Vicat-Ring (H = 40 mm, dₖₗₑᵢₙ = 65 mm, d_{gross} = 75 mm) randgleich eingegossen. Der Vicat-Ring wurde 2 cm angehoben und ca. 5 sec über die ausfließende Schlämme gehalten. Der Durchmesser der ausgeflossenen Schlämme wurde an zwei zueinander senkrecht liegenden Achsen gemessen. Die Messung wurde einmal wiederholt. Das arithmetische Mittel aller vier Messungen ergibt das Fließmaß. Für das Copolymer gemäß Beispiel 1 wurde ein Fließmaß von 23 cm erhalten. Ohne Zusatz des Copolymers ergab sich ein Fließmaß von 13 cm.

### Beispiel 12:

Die Dispergierwirkung der erfindungsgemäßen Copolymere in salzhaltigen Schlämmen wurde folgendermaßen untersucht:

700 g Zement (Joppa Lafarge Class H) wurden mit 0,5 % bwoc des Copolymers vermischt und anschließend in 364,4 g Salzwasser (27 Gew.-% NaCl) eingerührt. Die Zementschlämme wurde 20 min bei 38 °C konditioniert. Anschließend wurde die verflüssigende Wirkung der erfindungsgemäßen Copolymere mit Hilfe eines Rotationsviskosimeters FANN 35 SA (r_{Rotor} = 1,8415 cm, r_{Stator} = 1,7245 cm, h_{Stator} = 3,800 cm, d_{Ringspalt} = 0,1170 cm) bestimmt. Die erhaltenen Werte wurden mit denen einer Schlämme ohne verflüssigenden Zusatz (-) und einer Schlämme mit Polyasparaginsäure (PAS) verglichen (Tabelle 4).

**Tabelle 4:**

| Polymer (gemäß Beispiel) | Schubspannung bei γ̇ = 511s⁻¹ Pa | Viskosität bei γ̇ =511s⁻¹ mPas | Schubspannung bei γ̇ =10,2s⁻¹ Pa | Viskosität bei γ̇ =10,2s⁻¹ mPas |
|---|---|---|---|---|
| - | 38,3 | 75 | 8,7 | 850 |
| PAS | 28,1 | 55 | 3,1 | 300 |
| 1 | 22,0 | 43 | 1,5 | 150 |
| 2 | 22, 5 | 44 | 1,0 | 100 |
| 3 | 25,6 | 50 | 2,6 | 250 |
| 5 | 33,2 | 65 | 3,1 | 300 |
| 6 | 25,0 | 49 | 3,1 | 300 |

### Beispiel 13:

Die erfindungsgemäßen Polymere sind als Wasserretentionsmittel für Gipsleime geeignet. Das Wasserrückhaltevermögen der mit den erfindungsgemäßen Polymeren behandelten Gipsleime wurde nach DIN 18 555 bestimmt. 350 g α-Halbhydrat wurden mit 210 g Leitungswasser, 0,25 g Retardan^{(R)} (Verzögerer für Gipse der Firma Tricosal, Illertissen) und 2,5 g des Copolymers gemäß Beispiel 4 vermischt und homogenisiert. Es wurde ein Wasserrückhaltevermögen von 70,9 % (Blindwert 41,5 %) erreicht.

### Beispiel 14:

Die erfindungsgemäßen Polymere sind als Wasserretentionsmittel für Zementschlämmen geeignet. Das Wasserrückhaltevermögen der mit den erfindungsgemäßen Polymeren behandelten Zementschlämmen wurde nach DIN 18 555 bestimmt. 350 g CEM I 42,5 R Zement wurden mit 210 g Leitungswasser und 2,5 g des Copolymers gemäß Beispiel 4 vermischt und homogenisiert. Das Wasserrückhaltevermögen der Zementschlämme betrug 84,6 % (Blindwert 63,8 %).

### Beispiel 15:

Die Bioabbaubarkeit der erfindungsgemäßen Copolymere wurde nach OECD 306 bestimmt. Die Bioabbaubarkeiten nach 28 Tagen wurden aus dem Verhältnis von biologischem zu theoretischem Sauerstoffbedarf bestimmt und mit der Bioabbaubarkeit von Polyasparaginsäure (PAS) verglichen (Tabelle 5).

**Tabelle 5:**

| Polymer (gemäß Beispiel) | biologische Abbaubarkeit nach 28 Tagen in % |
|---|---|
| PAS | 35% |
| 2 | 38% |
| 3 | 42% |

### Beispiel 16:

Die synergistische Wirkung der erfindungsgemäßen Copolymere zusammen mit modifizierten Polysacchariden hinsichtlich des Wasserrückhaltevermögens wurde mit folgender Zementschlämme untersucht:

700 g Zement (Joppa Class H) wurden mit 0,25 Gew.-% Hydroxyethylcellulose und 1,0 % Gew.-% des Copolymers 2, jeweils bezogen auf den Zement-Gehalt, vermischt und anschließend in 266 g Wasser eingerührt. Die Zementschlämme wurde 20 min bei 88 °C konditioniert. Das Wasserrückhaltevermögen wurde gemäß API spec. 10 bei 70 bar und 88°C untersucht. Die erhaltenen Werte wurden mit denen einer Schlämme ohne Copolymer bzw. ohne Hydroxyethylcellulose verglichen. Während ohne Copolymer ein Wasserverlust von 350 mL und ohne Hydroxyethylcellulose ein Wasserverlust von 250 mL auftrat, ergab der kombinierte Einsatz beider Polymere einen Wasserverlust von nur 60 mL.

## Patentansprüche

1. Wasserlösliche, biologisch abbaubare und Aminoplastbildner-freie Copolymere auf Polyamidbasis, **dadurch gekennzeichnet, dass** sie mindestens eine aufgepfropfte Seitenkette aufgebaut aus Aldehyden und Schwefel-haltigen Säuren oder deren Salzen enthalten.

2. Copolymere nach Anspruch 1, **dadurch gekennzeichnet, dass** sie die Polyamid-Komponente in Anteilen von 5 bis 80 Gew.-% und bevorzugt von 10 bis 60 Gew.-%, die Aldehyd-Komponente in Anteilen von 5 bis 90 Gew.-% und bevorzugt von 10 bis 70 Gew.-% und die Schwefel-haltige Säure-Komponente in Anteilen von 5 bis 60 Gew.-% und bevorzugt von 15 bis 40 Gew.-% enthalten.

3. Copolymere nach einem der Ansprüche 1 oder 2, **dadurch gekennzeichnet, dass** sie als Polyamid-Komponente natürliche Polyamide, besonders bevorzugt Caseine, Gelatinen, Kollagene, Knochenleime, Blutalbumine, Sojaproteine und deren durch Oxidation, Hydrolyse oder Depolymerisation entstandene Abbauprodukte, synthetische Polyamide, besonders bevorzugt Polyasparaginsäuren oder Copolymere aus Asparagin- und Glutaminsäure und deren durch Oxidation, Hydrolyse oder Depolymerisation entstandene Abbauprodukte sowie Mischungen daraus aufweisen.

4. Copolymere nach einem der Ansprüche 1 bis 3, **dadurch gekennzeichnet, dass** sie aufgepfropfte Aldehyde auf Basis von Paraformaldehyd, Paraldehyd und/oder unverzweigter nichtaromatischer Aldehyde, vorzugsweise mit 1 bis 5 C-Atomen, und besonders bevorzugt Formaldehyd, Acetaldehyd und Glyoxal enthalten.

5. Copolymere nach einem der Ansprüche 1 bis 4, **dadurch gekennzeichnet, dass** sie aufgepfropfte Schwefel-haltige Säuren (-Salze) auf Basis anorganischer Schwefelsalze, vorzugsweise Sulfite, Hydrogensulfite und/oder Disulfite von (Erd-)Alkalimetallen, von Aluminium, Eisen und/oder Ammonium enthalten.

6. Copolymere nach einem der Ansprüche 1 bis 5, **dadurch gekennzeichnet, dass** die Seitenkette zusätzlich aus mindestens einer Verbindung der Reihe Ketone und aromatische Alkohole aufgebaut ist.

7. Copolymere nach Anspruch 6, **dadurch gekennzeichnet, dass** sie die weitere(n) Verbindung(en) in Anteilen von 5 bis 85 Gew.-% und bevorzugt von 10 bis 70 Gew.-% enthalten.

8. Copolymere nach einem der Ansprüche 6 bis 7, **dadurch gekennzeichnet, dass** sie aufgepfropfte Ketone auf Basis nichtaromatischer Ketone und besonders bevorzugt 2-Propanon, 2-Butanon oder Brenztraubensäure aufweisen.

9. Copolymere nach einem der Ansprüche 6 bis 8, **dadurch gekennzeichnet, dass** sie aufgepfropfte aromatische Alkohole auf Basis von Phenolen, Kresolen, Catecholen oder Resorcinen enthalten.

10. Copolymere nach einem der Ansprüche 1 bis 9, **dadurch gekennzeichnet, dass** sie durch Pfropfpolymerisation bei Temperaturen zwischen -10 und 250 °C und insbesondere zwischen 0 und 130 °C, vorzugsweise jeweils in Gegenwart eines Lösemittels und insbesondere eines polaren Lösemittels wie Wasser oder Dimethylsulfoxid, oder durch thermische Behandlung hergestellt wurden.

11. Verwendung von wasserlöslichen, biologisch abbaubaren Copolymeren auf Polyamidbasis, welche mindestens eine aufgepfropfte Seitenkette aufgebaut aus Aldehyden und Schwefel-haltigen Säuren oder deren Salzen enthalten, als Fließmittel für anorganische Bindemittel und Pigmente und besonders bevorzugt für hydraulische Bindemittel.

12. Verwendung nach Anspruch 11, **dadurch gekennzeichnet, dass** die Copolymere eine Molmasse M̅ₙ < 50 000 g/mol besitzen.

13. Verwendung von wasserlöslichen, biologisch abbaubaren Copolymeren auf Polyamidbasis, welche mindestens eine aufgepfropfte Seitenkette aufgebaut aus Aldehyden und Schwefel-haltigen Säuren oder deren Salzen enthalten, als Wasserretentionsmittel.

14. Verwendung nach Anspruch 13, **dadurch gekennzeichnet, dass** die Copolymere eine Molmasse M̅ₙ > 50 000 g/mol besitzen.

15. Verwendung nach einem der Ansprüche 11 bis 14, **dadurch gekennzeichnet, dass** die Seitenkette zusätzlich aus mindestens einer Verbindung der Reihe Ketone, aromatische Alkohole und Aminoplastbildner aufgebaut ist.

16. Verwendung nach Anspruch 15, **dadurch gekennzeichnet, dass** sie die weitere(n) Verbindung(en) in Anteilen von 5 bis 85 Gew.-% und bevorzugt von 10 bis 70 Gew.-% enthalten.

17. Verwendung nach einem der Ansprüche 15 oder 16, **dadurch gekennzeichnet, dass** die Copolymere als Aminoplastbildner Dicyandiamid, Harnstoff-Derivate und/oder Amino-s-triazine enthalten.

18. Verwendung nach einem der Ansprüche 15 oder 16, **dadurch gekennzeichnet, dass** die Copolymere aufgepfropfte Ketone auf Basis nichtaromatischer Ketone und besonders bevorzugt 2-Propanon, 2-Butanon oder Brenztraubensäure aufweisen.

19. Verwendung nach einem der Ansprüche 15 oder 16, **dadurch gekennzeichnet, dass** die Copolymere aufgepfropfte aromatische Alkohole auf Basis von Phenolen, Kresolen, Catecholen oder Resorcinen enthalten.

20. Verwendung nach einem der Ansprüche 15 bis 19, **dadurch gekennzeichnet, dass** die Copolymere aufgepfropfte Amino-s-triazine auf Basis von Melamin(-Derivate) und besonders bevorzugt Melamin aufweisen.

21. Verwendung der Copolymere nach einem der Ansprüche 11 bis 20 in Verbindung mit modifizierten und/oder nicht modifizierten Polysacchariden.

22. Verwendung nach Anspruch 21, **dadurch gekennzeichnet dass** als Polysaccharide modifizierte Cellulosen und besonders bevorzugt Hydroxyalkylcellulosen mit Alkyl = C₁₋₄ eingesetzt werden.

## Claims

1. Water-soluble, biologically degradable and aminoplast former-free copolymers based on polyamide, **characterized in that** they contain at least one grafted side chain composed of aldehydes and sulphur-containing acids or salts thereof.

2. Copolymers according to claim 1, **characterized in that** they contain the polyamide component in proportions of 5 to 80 % by weight and preferably of 10 to 60 % by weight, the aldehyde component in proportions of 5 to 90 % by weight and preferably of 10 to 70 % by weight and the sulphur-containing acidic component in proportions of 5 to 60 % by weight and preferably of 15 to 40 % by weight.

3. Copolymers according to one of the claims 1 or 2, **characterized in that** they have as the polyamide component natural polyamides, particularly preferably caseins, gelatins, collagens, bone glues, blood albumins, soya proteins and degradation products thereof formed by oxidation, hydrolysis or depolymerization, synthetic polyamides, particularly preferably polyaspartic acids or copolymers of aspartic and glutamic acid and degradation products thereof formed by oxidation, hydrolysis or depolymerization as well as mixtures thereof.

4. Copolymers according to one of the claims 1 to 3, **characterized in that** they contain grafted aldehydes based on paraformaldehyde, paraldehyde and/or unbranched non-aromatic aldehydes preferably with 1 to 5 C atoms and particularly preferably formaldehyde, acetaldehyde and glyoxal.

5. Copolymers according to one of the claims 1 to 4, **characterized in that** they contain grafted sulphur-containing acids (salts) based on inorganic sulphur salts, preferably sulphites, hydrogen sulphites and/or disulphites of alkali (alkaline earth) metals, of aluminium, iron and/or ammonium.

6. Copolymers according to one of the claims 1 to 5, **characterized in that** the side chain is additionally composed of at least one compound from the group comprising ketones and aromatic alcohols.

7. Copolymers according to claim 6, **characterized in that** the additional compound(s) is/are present in proportions of 5 to 85 % by weight and preferably of 10 to 70 % by weight.

8. Copolymers according to one of the claims 6 to 7, **characterized in that** they have grafted ketones based on non-aromatic ketones and particularly preferably 2-propanone, 2-butanone or pyruvic acid.

9. Copolymers according to one of the claims 6 to 8, **characterized in that** they contain grafted aromatic alcohols based on phenols, cresols, catechols or resorcins.

10. Copolymers according to one of the claims 1 to 9, **characterized in that** they were produced by graft polymerization at temperatures between -10 and 250° C and in particular between 0 and 130°C in each case preferably in the presence of a solvent and in particular in the presence of a polar solvent such as water or dimethyl sulphoxide or by thermal treatment.

11. Use of water-soluble, biologically degradable copolymers based on polyamide which contain at least one grafted side chain composed of aldehydes and sulphur-containing acids or salts thereof as flow agents for inorganic binders and pigments and particularly preferably for hydraulic binders.

12. Use according to claim 11, **characterized in that** the copolymers have a molar mass *M̅ₙ* of < 50,000 g/mol.

13. Use of water-soluble, biologically degradable copolymers based on polyamide which contain at least one grafted side chain composed of aldehydes and sulphur-containing acids or salts thereof as water retention agents.

14. Use according to claim 13, **characterized in that** the copolymers have a molar mass *M̅ₙ* of > 50,000 g/mol.

15. Use according to one of the claims 11 to 14, **characterized in that** the side chain is additionally composed of at least one compound from the group comprising ketones, aromatic alcohols and aminoplast formers.

16. Use according to claim 15, **characterized in that** the additional compound(s) are present in proportions of 5 to 85 % by weight and preferably of 10 to 70 % by weight.

17. Use according to one of the claims 15 or 16, **characterized in that** the copolymers contain dicyandiamide, urea derivatives and/or amino-s-triazines as aminoplast formers.

18. Use according to one of the claims 15 or 16, **characterized in that** the copolymers have grafted ketones based on non-aromatic ketones and particularly preferably 2-propanone, 2-butanone or pyruvic acid.

19. Use according to one of the claims 15 or 16, **characterized in that** the copolymers contain grafted aromatic alcohols based on phenols, cresols, catechols or resorcins.

20. Use according to one of the claims 15 to 19, **characterized in that** the copolymers have grafted amino-s-triazines based on melamine (derivatives) and particularly preferably on melamine.

21. Use of the copolymers according to one of the claims 11 to 20 in combination with modified and/or unmodified polysaccharides.

22. Use according to claim 21, **characterized in that** modified celluloses and particularly preferably hydroxyalkylcelluloses in which alkyl = C₁₋₄ are used as polysaccharides.

## Revendications

1. Copolymères à base de polyamide hydrosolubles, biodégradables et exempts de générateurs d'aminoplastes, **caractérisés en ce qu'**ils contiennent au moins une chaîne latérale greffée constituée d'aldéhydes et d'acides contenant du soufre ou de leurs sels.

2. Copolymères selon la revendication 1, **caractérisés en ce qu'**ils contiennent le composant polyamide en des quantités allant de 5 à 80% en poids et de préférence de 10 à 60% en poids, le composant aldéhyde en des quantités allant de 5 à 90% en poids et de préférence de 10 à 70% en poids, et le composant acide contenant du soufre en des quantités allant de 5 à 60% en poids et de préférence de 15 à 40% en poids.

3. Copolymères selon la revendication 1 ou la revendication 2, **caractérisés en ce qu'**ils présentent en tant que composant polyamide des polyamides naturels, de façon particulièrement préférée des caséines, des gélatines, des collagènes, des colles d'os, des albumines sanguines, des protéines du soja et leurs produits de dégradation obtenus par oxydation, hydrolyse ou dépolymérisation, des polyamides synthétiques, de façon particulièrement préférée des acides polyasparaginiques ou des copolymères d'acides asparaginique et glutaminique et leurs produits de dégradation obtenus par oxydation, hydrolyse ou dépolymérisation, ainsi que des mélanges de ces substances.

4. Copolymères selon l'une des revendications 1 à 3, **caractérisés en ce qu'**ils contiennent des aldéhydes greffés à base de paraformaldéhyde, de paraldéhyde et/ou d'aldéhydes non aromatiques non ramifiés, de préférence ayant de 1 à 5 atomes de carbone, de façon particulièrement préférée le formaldéhyde, l'acétaldéhyde et le glyoxal.

5. Copolymères selon l'une des revendications 1 à 4, **caractérisés en ce qu'**ils contiennent des acides (sels) contenant du soufre greffés à base de sels de soufre inorganiques, de préférence des sulfites, des hydrogénosulfites et/ou des bisulfites de métaux alcalins ou alcalino-terreux, d'aluminium, de fer et/ou d'ammonium.

6. Copolymères selon l'une des revendications 1 à 5, **caractérisés en ce que** la chaîne latérale est constituée en plus d'au moins un composé du groupe des cétones et des alcools aromatiques.

7. Copolymères selon la revendication 6, **caractérisés en ce qu'**ils contiennent le ou les autres composés en des quantités allant de 5 à 85% en poids, de préférence de 10 à 70% en poids.

8. Copolymères selon l'une des revendications 6 à 7, **caractérisés en ce qu'**ils présentent des cétones greffées à base de cétones non aromatiques, de façon particulièrement préférée la 2-propanone, la 2-butanone ou l'acide pyruvique.

9. Copolymères selon l'une des revendications 6 à 8, **caractérisés en ce qu'**ils contiennent des alcools aromatiques greffés à base de phénols, de crésols, de catéchols ou de résorcinols.

10. Copolymères selon l'une des revendications 1 à 9, **caractérisés en ce qu'**ils ont été obtenus par polymérisation par greffage à des températures allant de -10 à 250°C et en particulier de 0 et 130 °C, de préférence en présence d'un solvant et en particulier d'un solvant polaire tel que l'eau ou le diméthylsulfoxyde, ou par un traitement thermique.

11. Utilisation de copolymères à base de polyamide hydrosolubles biodégradables, contenant au moins une chaîne latérale greffée constituée d'aldéhydes et d'acides contenant du soufre ou de leurs sels, comme dissolvant pour des liants et pigments inorganiques, de façon particulièrement préférée pour des liants hydrauliques.

12. Utilisation selon la revendication 11, **caractérisée en ce que** les copolymères ont une masse molaire M̅ₙ < 50 000 g/mol.

13. Utilisation de copolymères à base de polyamide hydrosolubles biodégradables, contenant au moins une chaîne latérale greffée constituée d'aldéhydes et d'acides contenant du soufre ou de leurs sels comme agent de rétention d'eau.

14. Utilisation selon la revendication 13, **caractérisée en ce que** les copolymères ont une masse molaire Mₙ > 50 000 g/mol.

15. Utilisation selon l'une des revendications 11 à 14, **caractérisée en ce que** la chaîne latérale est constituée en plus d'au moins un composé du groupe des cétones, des alcools aromatiques et des générateurs d'aminoplastes.

16. Utilisation selon la revendication 15, **caractérisée en ce que** le ou les autres composés sont contenus en des quantités allant de 5 à 85% en poids, de préférence de 10 à 70% en poids.

17. Utilisation la revendication 15 ou la revendication 16, **caractérisée en ce que** les copolymères contiennent en tant que générateurs d'aminoplastes du dicyanodiamide, des dérivés d'urée et/ou des amino-s-triazines.

18. Utilisation selon la revendication 15 ou la revendication 16, **caractérisée en ce que** les copolymères présentent des cétones greffées à base de cétones non aromatiques, de façon particulièrement préférée la 2-propanone, la 2-butanone ou l'acide pyruvique.

19. Utilisation selon la revendication 15 ou la revendication 16, **caractérisée en ce que** les copolymères contiennent des alcools aromatiques greffés à base de phénols, de crésols, de catéchols ou de résorcinols.

20. Utilisation selon l'une des revendications 15 à 19, **caractérisée en ce que** les copolymères présentent des amino-s-triazines greffées à base de mélamine (dérivés de mélamine), de façon particulièrement préférée la mélamine.

21. Utilisation des copolymères selon l'une des revendications 11 à 20 en combinaison avec des polysaccharides modifiés et/ou non modifiés.

22. Utilisation selon la revendication 21, **caractérisée en ce que** les polysaccharides utilisés sont des celluloses modifiées, de façon particulièrement préférée des hydroxyalkylcelluloses dans lesquelles l'alkyle est un alkyle en C₁ à C₄.
